# FASCICULE DE BREVET EUROPEEN

(11) **EP 1 335 483 B1**
(45) Date de publication et mention de la délivrance du brevet: **22.08.2012**
(21) Numéro de dépôt: 03290269.4
(22) Date de dépôt: 04.02.2003
(51) Int. Cl.: H02M 3/335

(54) **Circuit secondaire de convertisseur comportant au moins une sortie auxiliaire**
Stromwandlersekundärschaltung mit mindestens einem weiteren Ausgang
Converter secondary circuit with at least an auxiliary output

(30) Priorité: 07.02.2002 FR 0201498
(43) Date de publication de la demande: 13.08.2003
(73) Titulaire: AEG Power Solutions B.V., 1161 AH Zwanenburg (NL)
(72) Inventeur: Thereze, Jean-Marie, 22300 Lannion (FR); Balocco, Didier, 22300 Lannion (FR)
(74) Mandataire: Thévenet, Jean-Bruno

(56) Documents cités:
- EP-A- 0 954 088
- EP-A- 0 989 660

## Description

La présente invention concerne un circuit secondaire de convertisseur comportant au moins une sortie auxiliaire.

De façon générale, un convertisseur reçoit une puissance électrique d'une source d'énergie ayant une tension d'entrée et délivre une puissance électrique à une tension de sortie vers une charge. La tension à la sortie principale est régulée par le primaire du convertisseur afin de garantir qu'une tension constante est appliquée à la charge même si la tension d'entrée ou le courant de sortie ou les deux varient. Souvent, il est souhaitable d'ajouter une ou plusieurs sorties dites sorties auxiliaires. Ces sorties auxiliaires doivent être régulées de façon indépendante par un circuit secondaire.
Le document de brevet EP0 954 088 décrit un circuit secondaire pour un convertisseur comportant une sortie principale et une sortie auxiliaire. Ce convertisseur comprend :
- un premier circuit de redressement synchrone autocommandé engendrant une première tension redressée pour la sortie principale, ce premier circuit recevant en entrée une tension fournie par un premier transformateur;
- et un second circuit de redressement synchrone engendrant une seconde tension redressée pour ladite sortie auxiliaire, ce second circuit recevant en entrée une tension fournie par un second transformateur dont le primaire est constitué de la self de filtrage de la première tension redressée.
Ce second circuit est commandé par un circuit de commande de régulation auxiliaire comportant deux bornes reliées respectivement aux deux bornes du secondaire du premier transformateur, en vue de synchroniser le second circuit de redressement.

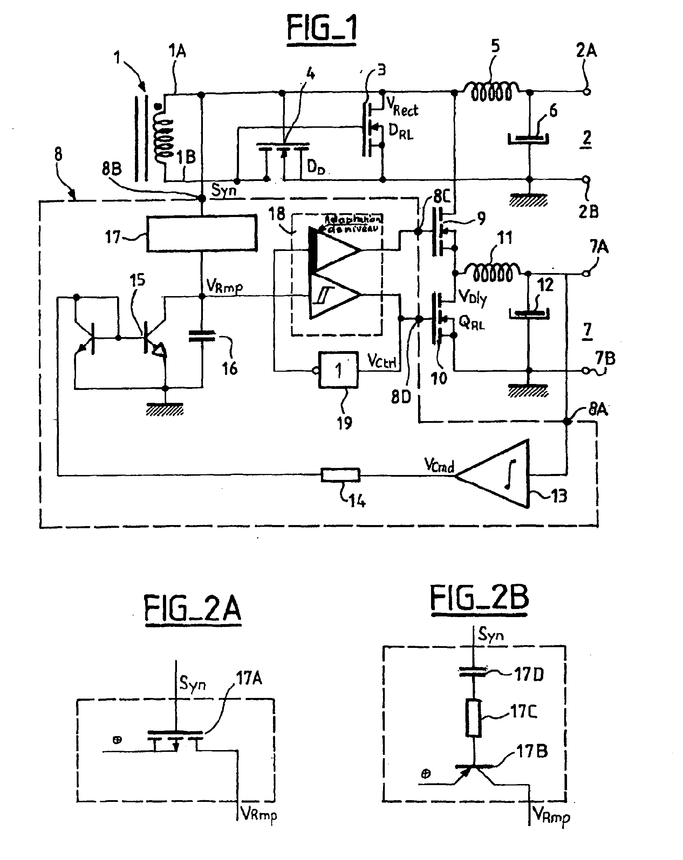

Le document de brevet EP 0 618 666 décrit un circuit secondaire de convertisseur équipé d'une sortie principale. Ce circuit est représenté sur la **figure 1**.

Un signal alternatif venant du primaire est présent aux bornes 1A et 1B du transformateur 1. Ce signal est redressé par un circuit de redressement et filtré par un filtre de façon à obtenir la tension continue désirée aux bornes 2A et 2B de la sortie principale 2.

Le circuit de redressement synchrone auto commandé est constitué de deux transistors MOSFETs, un transistor direct 4 et un transistor de roue libre 3, et le filtre est constitué d'un circuit LC 5 et 6. L'utilisation du redressement synchrone à base de MOSFETs réduit considérablement les pertes. La grille du transistor de roue libre 3 est connectée à la borne 1B du transformateur 1 et la grille du transistor direct 4 est connectée à la borne 1A du transformateur 1. Grâce à ces connexions, la commutation des transistors 3 et 4 est automatiquement synchronisée avec le circuit primaire.

Une sortie auxiliaire 7 peut être montée sur un tel circuit secondaire de convertisseur.

Un circuit de sortie auxiliaire connu est représenté sur la **figure** 1.

La sortie auxiliaire 7 comporte également un circuit de redressement synchrone commandé constitué de deux transistors MOSFETs, un transistor direct 9 et un transistor de roue libre 10, et un filtre constitué d'un circuit LC 11 et 12 et est régulée par un circuit de commande de régulation auxiliaire 8.

Ce circuit de commande de régulation auxiliaire 8 comporte une entrée de commande 8A connectée à la borne 7A de la sortie auxiliaire 7, une entrée de synchronisation 8B connectée à la borne 1A du transformateur 1 et deux sorties 8C et 8D connectées respectivement aux grilles des transistors 9 et 10.

Le circuit de commande de régulation auxiliaire crée un délai permettant de contrôler l'énergie transmise à chaque cycle de commutation. Ce délai est fonction de la tension de commande V_{Cmd}.

Afin d'éviter la nécessité d'un commutateur bidirectionnel, c'est la tension unidirectionnelle après redressement V_{Rect} dans le circuit secondaire qui est prélevée pour alimenter la sortie auxiliaire 7 via les transistors MOSFETs 9 et 10 et le filtre LC 11 et 12.

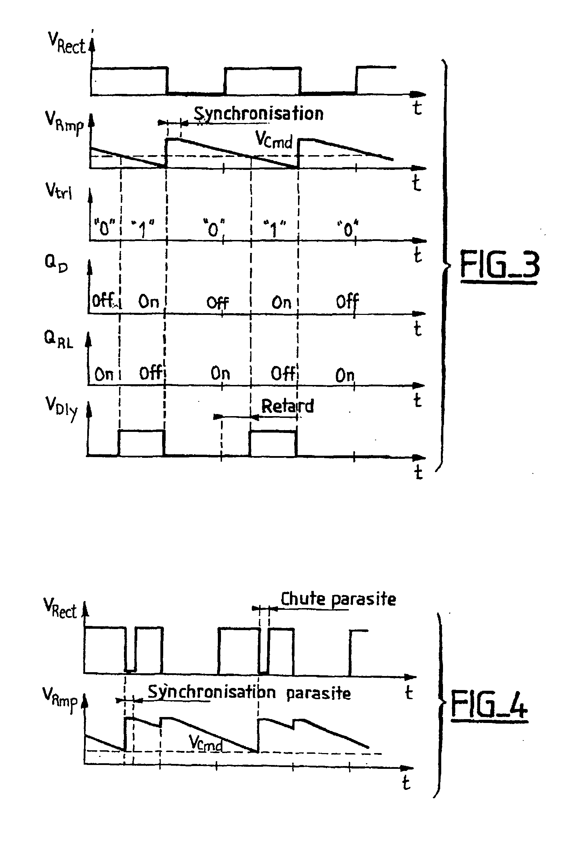

Les formes d'ondes théoriques des signaux dans un tel agencement sont représentées sur la **figure 3**.

La tension redressée par le circuit secondaire V_{Rect} est prélevée au drain du transistor direct 9. Par un intégrateur, la tension en sortie est transformée en tension continue V_{Cmd} et par comparaison avec une rampe de tension V_{Rmp}, un signal binaire V_{Ctrl} en est obtenu qui commande l'ouverture et la fermeture des transistors 9 et 10, représentées par les graphes Q_{D} et Q_{RL}. La tension en résultant V_{Dly} est donc décalée d'un certain retard avant d'être filtrée pour obtenir la tension à la sortie auxiliaire 7.

Les moyens utilisés pour ce faire sont connus et seront précisés dans la description ci-après.

La rampe de tension V_{Rmp} est synchronisée sur la tension à la borne 1A du transformateur 1 et donc sur la tension redressée V_{Rect}.

Ceci représente le fonctionnement idéal. En réalité, lors de chaque commutation du transistor direct 9 du circuit de redressement synchrone de la sortie auxiliaire , il apparaît une chute de tension parasite de la tension redressée V_{Rect} comme représentée en **figure 4****.**

Cette chute de tension parasite entraîne une synchronisation parasite de la rampe de tension V_{Rmp} et un mauvais fonctionnement du circuit, la tension de sortie diminuant et le convertisseur s'arrêtant de fonctionner.

Une solution serait d'ajouter un filtre afin d'annuler cet effet parasite. Cependant, le rendement total du convertisseur décroît alors à cause du délai introduit par ce filtre. De plus, lorsque le courant de la sortie auxiliaire est trop important, un tel filtre n'est plus efficace.

L'invention résout ce problème et propose, pour ce faire, un circuit secondaire de convertisseur selon la revendication 1.

Lorsque le circuit de redressement synchrone est constitué de deux transistors MOSFETs, un transistor principal et un transistor de roue libre, la grille du transistor de roue libre étant connectée à une borne d'un transformateur en un point dit point de synchronisation et ladite entrée de synchronisation dudit circuit de commande de régulation étant connectée au circuit secondaire, ladite entrée de synchronisation est connectée audit point de synchronisation.

Avantageusement, ladite entrée de synchronisation est connectée dans le circuit de commande de régulation auxiliaire à un détecteur qui peut être un détecteur de front montant, un détecteur de front descendant ou un détecteur de niveau.

De préférence, ledit second circuit de redressement synchrone est constitué de deux transistors MOSFETs, un transistor direct et un transistor de roue libre.

L'invention est décrite ci-après plus en détail à l'aide de figures ne représentant qu'un mode de réalisation préféré de l'invention.

La **figure 1** est une vue d'un circuit secondaire de convertisseur selon l'art antérieur refletè par le document de brevet EP 0 618 666.

Les figures 2A et 2B sont des vues partielles du même circuit que la **figure 1**.

La **figure 3** est un ensemble de diagrammes schématisant le fonctionnement idéal du circuit représenté sur la **figure 1**.

La **figure 4** est un ensemble de diagrammes schématisant le fonctionnement réel du circuit représenté sur la **figure 1**.

La **figure 5** est une vue d'un circuit secondaire de convertisseur selon l'invention.

La **figure 6** est un ensemble de diagrammes schématisant le fonctionnement du circuit représenté sur la **figure 5****.**

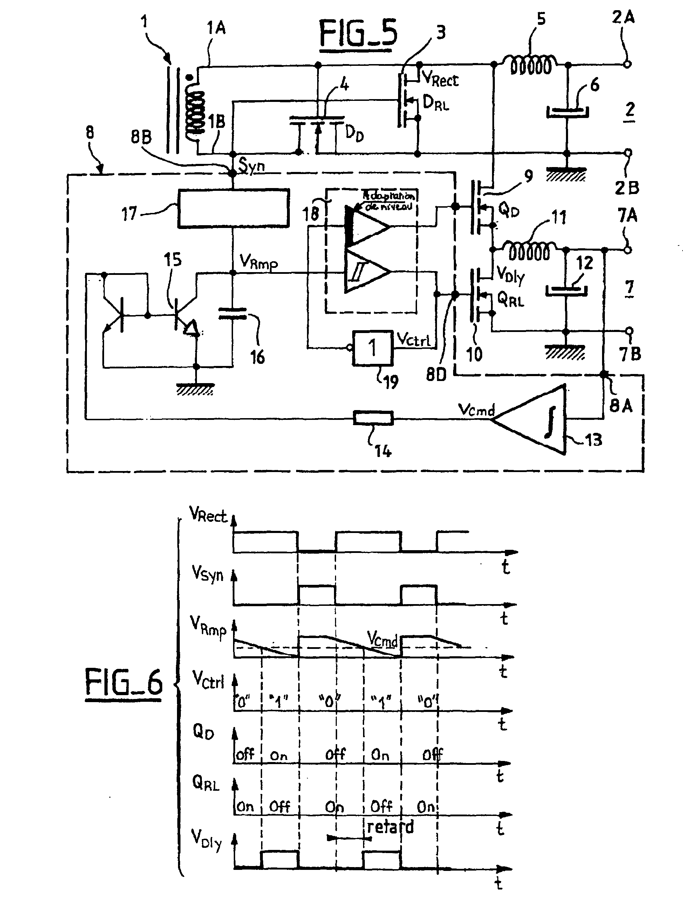

Le circuit secondaire du transformateur 1, représenté sur la **figure 1** ou **5**, comporte une sortie principale 2 et une sortie auxiliaire 7. Il comprend un circuit de redressement synchrone auto commandé constitué de deux transistors MOSFETs, un transistor direct 4 et un transistor de roue libre 3, et un filtre 5, 6 constitué d'un circuit LC. La grille du transistor de roue libre 3 est connectée à la borne 1B du transformateur 1 où est réalisée sa synchronisation en un point dit de synchronisation Syn et la grille du transistor 4 est connectée à la borne 1A du transformateur 1.

Une sortie auxiliaire 7 est montée sur un tel circuit secondaire de convertisseur. La sortie auxiliaire 7 comporte également un circuit de redressement synchrone commandé constitué de deux transistors MOSFETs, un transistor direct 9 et un transistor de roue libre 10, et un filtre constitué d'un circuit LC 11 et 12 et est régulée par un circuit de commande de régulation auxiliaire 8.

Selon l'art antérieur représenté sur la **figure 1**, ce circuit de commande de régulation auxiliaire 8 comporte une entrée de commande 8A connectée à la borne 7A de la sortie auxiliaire 7, une entrée de synchronisation 8B connectée à la borne 1A du transformateur et deux sorties 8C et 8D connectées respectivement aux grilles des transistors 9 et 10.

Le circuit de commande de régulation auxiliaire 8 est constitué :
- d'un réseau correcteur constitué d'un intégrateur 13 connecté à l'entrée 8A et dont le signal de sortie V_{Cmd} est une tension continue,
- d'une résistance 14,
- d'un miroir de courant 15 aux bornes duquel est connectée en parallèle une capacité 16 qui est chargée ou déchargée à courant constant forme ainsi une rampe de tension V_{Rmp},
- d'un détecteur 17 destiné à la charge ou la décharge rapide de la capacité 16 et connecté par ailleurs à l'entrée de synchronisation 8B,
- d'un circuit de commande de demi-pont 18 bouclé avec un inverseur 19 et menant aux sorties 8C et 8D du circuit de commande de régulation auxiliaire 8.

Deux types de détecteurs 17 peuvent être utilisés. Ces deux types sont représentés sur les **figures 2A** et **2B**.

Le détecteur 17 peut être un détecteur de niveau de tension afin de déterminer le moment où la tension redressée V_{rect} est égale à zéro et peut être constitué d'un transistor MOSFET 17A dont la grille est connectée à l'entrée 1A du transformateur 1, la source est reliée à une source de tension positive et le drain est connectée à la capacité 16.

Le détecteur 17 peut être un circuit de dérivateur et peut être constitué d'un transistor bipolaire 17B commandé pour fixer la tension de la capacité 16, d'une résistance 17C et d'une capacité 17D en série. La capacité 17D est connectée à l'entrée 1A du transformateur 1 et le transistor 17B est connectée à la capacité 16.

Le fonctionnement d'un tel circuit est le suivant en référence aux diagrammes de la **figure 3**.

Dans une première étape, le retard est créé. Lorsque la tension aux bornes du transformateur est positive, la tension de rampe V_{Rmp} commence à décroître. Cette tension de rampe est comparée au seuil du circuit de commande de demi-pont 18. Le signal de commande V_{Cmd} fixe la pente de la tension de rampe V_{Rmp} au travers du miroir de courant 15 et de la résistance 14. Tant que la tension de rampe V_{Rmp} est supérieure à ce seuil, le circuit génère le retard. Durant ce retard, le transistor direct 9 est bloqué et le transistor de roue libre 10 conduit.

Dans une deuxième étape, l'énergie est transférée. Lorsque la tension de rampe V_{Rmp} atteint le seuil, le transistor de roue libre 10 est bloqué et le transistor principal 9 conduit. Il y a transfert d'énergie vers la sortie 7 tant que la tension du transformateur 1 est positive.

Dans une troisième étape, la roue libre 3 conduit et le transistor direct 4 est bloqué. Le détecteur 17 est mis en fonction afin de synchroniser le circuit de régulation auxiliaire 8. Lorsque la tension du transformateur 1 devient négative, le transistor de roue libre 10 conduit de nouveau et le transistor direct 9 est bloqué. Durant cette étape, le circuit est synchronisé en utilisant une tension du transformateur 1. Pour ce faire, la tension de rampe V_{Rmp} est fixée à une valeur supérieure au seuil grâce à une source de tension.

Selon l'invention représentée sur la **figure 5**, l'entrée de synchronisation 8B est connectée au point de commande Syn du transistor de roue libre 3 du circuit secondaire.

Au lieu de prendre comme référence de synchronisation la tension redressée V_{rect} comme dans le cas précédent illustrant l'art antérieur, c'est la tension de grille du transistor de roue libre 3 qui est utilisée. Ce signal de tension existant lorsque la tension redressée V_{rect} est nulle, comme représenté sur les diagrammes de la **figure 6**, les effets parasites de la commutation du transistor direct 9 du circuit secondaire de la sortie auxiliaire sont évités.

Le détecteur 17 peut alors être des mêmes types que précédemment décrits sur les **figures 2A** et **2B**. De façon générale, il peut être un détecteur de front montant, un détecteur de front descendant ou un détecteur de niveau.

## Revendications

1. Circuit secondaire de convertisseur comportant une sortie principale (2) et au moins une sortie auxiliaire (7), ce circuit secondaire comprenant :
- un premier circuit de redressement synchrone autocommandé (3, 4) engendrant une première tension redressée (Vrect) pour la sortie principale (2) ;
- un second circuit de redressement synchrone (9, 10) engendrant une seconde tension redressée pour ladite sortie auxiliaire (7A), ce second circuit étant commandé par un circuit de commande de régulation auxiliaire (8) comportant une entrée de synchronisation (8 B) ;
et en ce que ladite entrée de synchronisation (8B) reçoit un signal de synchronisation (Syn) qui est nul lorsque ladite première tension redressée (Vrect) est non nulle.
**caractérisé en ce que** le second circuit de redressement synchrone reçoit en entrée ladite première tension redressée (Vrect).

2. Circuit selon la revendication 1, dont ledit premier circuit de redressement synchrone est constitué de deux transistors MOSFETs, un transistor principal (4) et un transistor de roue libre (3), la grille du transistor de roue libre (3) étant connectée à une borne (1B) d'un transformateur (1) en un point dit point de synchronisation (Syn) et ladite entrée de synchronisation (8B) dudit circuit de commande de régulation auxiliaire (8) étant connectée au circuit secondaire, **caractérisé en ce que** ladite entrée de synchronisation (8B) est connectée audit point de synchronisation (Syn).

3. Circuit selon la revendication 2, **caractérisé en ce que** ladite entrée de synchronisation (8B) est connectée dans le circuit de commande de régulation auxiliaire (8) à un détecteur de front montant (17).

4. Circuit selon la revendication 2, **caractérisé en ce que** ladite entrée de synchronisation (8B) est connectée dans le circuit de commande de régulation auxiliaire (8) à un détecteur de front descendant (17).

5. Circuit selon la revendication 2, **caractérisé en ce que** ladite entrée de synchronisation (8B) est connectée dans le circuit de commande de régulation auxiliaire (8) à un détecteur de niveau (17).

6. Circuit selon l'une des revendications précédentes, **caractérisé en ce que** ledit second circuit de redressement synchrone est constitué de deux transistors MOSFETs, un transistor direct (9) et un transistor de roue libre (10).

## Claims

1. Secondary circuit of a converter having a main output (2) and at least one auxiliary output (7), the secondary circuit comprising:
- a first self-controlled synchronous rectifier circuit (3, 4) generating a first rectified voltage (Vrect) for the main output (2);
- a second synchronous rectifier circuit (9, 10) generating a second rectified voltage for said auxiliary output (7A), said second circuit being controlled by an auxiliary regulation control circuit (8) having a synchronization input (8B), the synchronization input (8B) receiving a synchronization signal (Syn) which is zero when said first rectified voltage (Vrect) is not zero;
**characterized in that** the second synchronous rectifier circuit receives as input said first rectified voltage (Vrect).

2. Circuit according to claim 1, wherein said first synchronous rectifier circuit is composed of two MOSFETs, a main transistor (4) and a freewheeling transistor (3), the gate of said freewheeling transistor (3) being connected to a terminal (1B) of a transformer (1) at a point named point of synchronization (Syn) and said synchronization input (8B) of said control circuit regulating means (8) being connected to the secondary circuit, **characterized in that** said synchronization input (8B) is connected to said point of synchronization (Syn).

3. Circuit according to claim 2, **characterized in that** said synchronization input (8B) is connected in the auxiliary regulation control circuit (8) to a rising edge detector (17).

4. Circuit according to claim 2, **characterized in that** said synchronization input (8B) is connected in the auxiliary regulation control circuit (8) to a falling edge detector (17).

5. Circuit according to claim 2, **characterized in that** said synchronization input (8B) is connected in the auxiliary regulation control circuit (8) to a level detector (17).

6. Circuit according to one of the preceding claims, **characterized in that** said second synchronous rectifier circuit is composed of two MOSFETs, a direct transistor (9) and a freewheeling transistor (10).

## Patentansprüche

1. Sekundärwandlerschaltung mit einem Hauptausgang (2) und wenigstens einem Nebenausgang (7), wobei diese Sekundärschaltung umfaßt:
- eine erste selbstgesteuerte Synchrongleichrichterschaltung (3, 4), die eine erste gleichgerichtete Spannung (V_{rect}) für den Hauptausgang (2) erzeugt,
- eine zweite Synchrongleichrichterschaltung (9, 10), die eine zweite gleichgerichtete Spannung für den Nebenausgang (7A) erzeugt, wobei diese zweite Schaltung durch einen Hilfsregelsteuerkreis (8), der einen Synchronisiereingang (8B) umfaßt, gesteuert wird,
und wobei der Synchronisiereingang (8B) ein Synchronisiersignal (Syn) empfängt, welches Null ist, wenn die erste gleichgerichtete Spannung (V_{rect}) ungleich Null ist,
**dadurch gekennzeichnet, daß** die zweite Synchrongleichrichterschaltung eingangsseitig die erste gleichgerichtete Spannung (V_{rect}) empfängt.

2. Schaltung nach Anspruch 1, deren erste Synchrongleichrichterschaltung von zwei MOSFET-Transistoren, einem Haupttransistor (4) und einen Freilauf-Transistor (3), gebildet ist, wobei das Gate des Freilauf-Transistors (3) an einer sogenannten Synchronisierstelle (Syn) an einen Anschluß (1 B) eines Transformators (1) angeschlossen ist und wobei der Synchronisiereingang (8B) des Hilfsregelsteuerkreises (8) an die Sekundärschaltung angeschlossen ist, **dadurch gekennzeichnet, daß** der Synchronisiereingang (8B) an die Synchronisierstelle (Syn) angeschlossen ist.

3. Schaltung nach Anspruch 2, **dadurch gekennzeichnet, daß** der Synchronisiereingang (8B) in dem Hilfsregelsteuerkreis (8) an einen Anstiegsflankendetekor (17) angeschlossen ist.

4. Schaltung nach Anspruch 2, **dadurch gekennzeichnet, daß** der Synchronisiereingang (8B) in dem Hilfsregelsteuerkreis (8) an einen Abfallsflankendetektor (17) angeschlossen ist.

5. Schaltung nach Anspruch 2, **dadurch gekennzeichnet, daß** der Synchronisiereingang (8B) in dem Hilfsregelsteuerkreis (8) an einen Pegeldetektor (17) angeschlossen ist.

6. Schaltung nach einem der vorhergehenden Ansprüche, **dadurch gekennzeichnet, daß** die zweite Synchrongleichrichterschaltung von zwei MOSFET-Transistoren, einem direkten Transistor (9) und einem Freilauf-Transistor (10), gebildet ist.
